# EUROPEAN PATENT SPECIFICATION

(11) **EP 4 476 993 B1**
(45) Date of publication and mention of the grant of the patent: **01.04.2026**
(21) Application number: 22925402.4
(22) Date of filing: 11.02.2022
(51) Int. Cl.: H04W 72/02, H04W 72/25

(54) **DEVICE TO DEVICE COMMUNICATION**
KOMMUNIKATION VON VORRICHTUNG ZU VORRICHTUNG
COMMUNICATION DE DISPOSITIF À DISPOSITIF

(43) Date of publication of application: 18.12.2024
(73) Proprietor: ZTE Corporation, Shenzhen, Guangdong 518057 (CN)
(72) Inventor: DU, Weiqiang, Shenzhen, Guangdong 518057 (CN); LUO, Wei, Shenzhen, Guangdong 518057 (CN)
(74) Representative: Vossius & Partner Patentanwälte Rechtsanwälte mbB
(86) International application number: PCT/CN2022/076081
(87) International publication number: WO 2023/151040

(56) References cited:
- WO-A1-2018/084796
- WO-A1-2020/198317
- WO-A1-2021/207459
- WO-A1-2021/207459
- WO-A1-2021/207473
- WO-A1-2022/027467
- CN-A- 113 170 280
- US-A1- 2019 373 647
- US-A1- 2023 247 652

## Description

This document is directed generally to wireless communications, and in particular to 5^{th} generation (5G) communications. in particular, to transmission of coordination information between user equipment, UE.

With the development of wireless multimedia services, people's demands for high data rate and user experience are increasing day by day, which puts forward higher requirements on the system capacity and coverage of traditional cellular networks. On the other hand, application scenarios such as public safety, social networking, close-range data sharing, and local advertising have increased the need for people to understand and communicate with nearby people or things (Proximity Services). The traditional base station-centric cellular network has limitations in terms of data rate and support for proximity services. Thus, device-to-device (D2D) communication technology emerges. The application of D2D technology can reduce the burden of cellular networks, reduce battery power consumption of user equipments (UEs), increase data rate, and improve the robustness of network system, which can well meet the above-mentioned requirements of high data rate services and proximity services. D2D technology is also called Proximity Services (ProSe), unilateral/sidechain/Sidelink(SL) communication. The interface between devices is a PC5 interface. WO 2021/207459 A1 discloses that the assistant UE may be a dedicated UE that provides candidate resource set information to other UEs that have no sensing capability.
WO 2022/027467 A1 discloses that the assistance resource selection information comprises a set of candidate resources that can be used by the first wireless device, or a set of candidate resources that can not be used by the first wireless device.

One aspect of the present disclosure relates to a wireless communication method. The invention is specified by the independent claims. Preferred embodiments are defined in the dependent claims. In the following description, although numerous features may be designated as optional, it is nevertheless acknowledged that all features comprised in the independent claims are not to be read as optional. In an embodiment, the wireless communication method includes: determining, by a first wireless communication terminal, a resource pool where coordination information is generated determining, by the first wireless communication terminal, a resource set in the resource pool; and performing, by the first wireless communication terminal, a Logical Channel Prioritization, LCP, procedure to transmit coordination information to a second wireless communication terminal via the resource set; wherein the coordination information is transmitted to allow the second wireless communication terminal to perform a sidelink transmission with the first wireless communication terminal

Another aspect of the present disclosure relates to a wireless communication method. In an embodiment, the wireless communication method includes: receiving, by a second wireless communication terminal from a first wireless communication terminal, coordination information via a resource set in a resource pool and performing, by the second wireless communication terminal, a sidelink transmission with the first wireless communication terminal according to the coordination information. wherein the resource pool is a resource pool where the coordination information is generated

Another aspect of the present disclosure relates to a wireless communication method. not claimed in the present invention In an embodiment, the wireless communication method includes: transmitting, by a relay wireless communication terminal to a wireless communication node, first information of a discovery signal, wherein the discovery signal is used to discover remote wireless communication terminals.

Another aspect of the present disclosure relates to a wireless communication method. not claimed in the present invention. In an embodiment, the wireless communication method includes: determining, by a first wireless communication terminal (e.g., TX UE), a resource set in a resource pool; and performing, by the first wireless communication terminal, a Logical Channel Prioritization, LCP, procedure to allow a coordination information request to be transmitted to a second wireless communication terminal (e.g., RX UE) via the resource set; wherein coordination information request is used to request the coordination information and the coordination information is used to allow the first wireless communication terminal to perform a sidelink transmission with the second wireless communication terminal.

Another aspect of the present disclosure relates to a wireless communication terminal. In an embodiment, the wireless communication terminal includes a communication unit and a processor. The processor is configured to: determine a resource pool where coordination information is generated determine a resource set in the resource pool; and perform a Logical Channel Prioritization, LCP, procedure to transmit coordination information to a second wireless communication terminal via the resource set, wherein the coordination information is transmitted to allow the second wireless communication terminal to perform a sidelink transmission with the first wireless communication terminal.

Another aspect of the present disclosure relates to a wireless communication terminal. In an embodiment, the wireless communication terminal includes a communication unit and a processor. The processor is configured to: receive, from a first wireless communication terminal, coordination information via a resource set in a resource pool LCP, procedure; and perform a sidelink transmission with the first wireless communication terminal according to the coordination information. wherein the resource pool is a resource pool where the coordination information is generated

Another aspect of the present disclosure relates to a wireless communication termina not claimed in the present invention. In an embodiment, not claimed in the present invention, the wireless communication terminal includes a communication unit and a processor. The processor is configured to: transmit, to a wireless communication node, first information of a discovery signal, wherein the discovery signal is used to discover remote wireless communication terminals.

Another aspect of the present disclosure not claimed in the present invention relates to a wireless communication terminal
In an embodiment, the wireless communication terminal includes a communication unit and a processor. The processor is configured to: determine a resource set in a resource pool; and perform a Logical Channel Prioritization, LCP, procedure to allow a coordination information request to be transmitted to a second wireless communication terminal via the resource set; wherein coordination information request is used to request the coordination information and the coordination information is used to allow the first wireless communication terminal to perform a sidelink transmission with the second wireless communication terminal.

Various embodiments not claimed in the present invention may preferably implement the following features:
Preferably, the first wireless communication terminal is configured to select a destination during the LCP procedure in response to the coordination information to be transmitted to the destination being available for a transmission and at least one of following conditions: a logical channel or a Medium Access Control Control Element, MAC CE, to be transmitted to the destination being available for a transmission; or the coordination information is generated from the resource pool including a sidelink grant.

Preferably, the first wireless communication terminal is configured to select a logical channel or a MAC CE after selecting a destination during the LCP procedure in response to the coordination information to be transmitted to selected destination being available for a transmission and at least one of following condition: a logical channel or a Medium Access Control Control Element, MAC CE, for the first data to be transmitted to the selected destination for the first data being available for a transmission; or the coordination information to be transmitted to the selected destination is generated from the resource pool including the a SL sidelink grant.

Preferably, the first wireless communication terminal is configured to select a logical channel or a MAC CE after selecting destination during the LCP procedure in response to: the coordination information request to be transmitted to the destination being available for a transmission and a logical channel or a Medium Access Control Control Element, MAC CE, to be transmitted to the destination being available for a transmission; or the coordination information request to be transmitted to the destination being available for a transmission and the coordination information request is used to request coordination information for the resource pool associated to a sidelink grant.

Preferably, the first wireless communication terminal is configured to determine the resource pool where the coordination information is generated or a request for the coordination information from the second wireless communication terminal is received.

Preferably, the first wireless communication terminal is configured to transmit an indication indicating a resource conflict to the second wireless communication terminal to allow the second wireless communication terminal to remove a conflicted resource in a slot.

Preferably, the first wireless communication terminal is configured to transmit an indication indicating a resource conflict to the second wireless communication terminal to allow the second wireless communication terminal to reselect an available resource to replace a conflicted resource in a slot.

Preferably, a time interval between a resource for the coordination information and a resource for a request for the coordination information is greater than or equal to a configured threshold.

Preferably, the second wireless communication is configured to receive an indication indicating a resource conflict from the first wireless communication terminal and remove a conflicted resource in a slot according to the indication.

Preferably, the second wireless communication is configured to receive an indication indicating a resource conflict from the first wireless communication terminal and reselect an available resource to replace a conflicted resource in a slot.

Preferably, a specific Quality of Service Flow Identifier, QFI, is used to indicate that the first information is for the discovery signal.

Preferably, an information element is used to indicate that the first information is for the discovery signal.

Preferably, the first information comprises an indication indicating the first information is for the discovery signal.

Preferably, the first information comprising at least one of: an updated SRC L2 ID for the discovery signal; or an old SRC L2 ID for the discovery signal.

Preferably, the first wireless communication terminal is configured to select a destination during the LCP procedure in response to: the coordination information request to be transmitted to the destination being available for a transmission and a logical channel or a Medium Access Control Control Element, MAC CE, to be transmitted to the destination being available for a transmission; or the coordination information request to be transmitted to the destination being available for a transmission and the coordination information request is used to request coordination information for the resource pool associated to a sidelink grant.

Preferably, the first wireless communication terminal is configured to determine the resource pool where the coordination information request is used for requesting coordination information.

The present disclosure relates to a computer program product comprising a computer-readable program medium code stored thereupon, the code, when executed by a processor, causing the processor to implement a wireless communication method recited in any one of foregoing methods.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
FIG. 1 shows a schematic diagram of a wireless terminal according to an embodiment of the present disclosure.
FIG. 2 shows a schematic diagram of a wireless network node according to an embodiment of the present disclosure.
FIGs. 3 to 6 show flowcharts of wireless communication methods according to embodiments of the present disclosure.

From the perspective of 5G standards, in the NR (new radio) sidelink communication system, there is negotiation for the time of data transmission between user equipment and equipment. For user equipment using NR sidelink mode 2 communication, it needs to continuously monitor the data receiving channel to select transmission resources. Besides, the UE transmission mechanism in the NR sidelink communication system cannot accurately obtain the communication conditions of the peer UE, which may cause problems of hidden terminals and exposed terminals. In order to avoid this problem, the UE can take the assistance resource selection information (i.e., inter-UE coordination information) provided by other UEs into account.

For inter-User Equipment (UE) coordination, there are two types of UE, one is UE-B, another is UE-A. For example: a UE that sends an explicit request for inter-UE coordination information can be UE-B, and a UE that received an explicit request from UE-B and sends inter-UE coordination information to the UE-B can be UE-A.

In another aspect, the UE-B may transmit PSCCH (Physical Sidelink. Control Channel)/PSSCH (Physical Sidelink. Shared Channel) with Sidelink Control Information (SCI) indicating reserved resource(s) to be used for its transmission. The UE-B may receive inter-UE coordination information from the UE-A indicating expected/potential resource conflict(s) for the reserved resource(s), and uses the inter-UE coordination information to determine resource re-selection. The UE-A may detect expected/potential resource conflict(s) on resource(s) indicated by the SCI from the UE-B, send inter-UE coordination information to the UE-B.

In other words, the UE-A can provide the assistance information for the UE-B's data transmission. The assistance information includes the preferred resource or non-preferred resource for UE-B transmission, or collide resource detected by UE-A.

In some embodiment, the SCI format 1-A includes information of: priority, frequency resource assignment, time resource assignment, and resource reservation period.

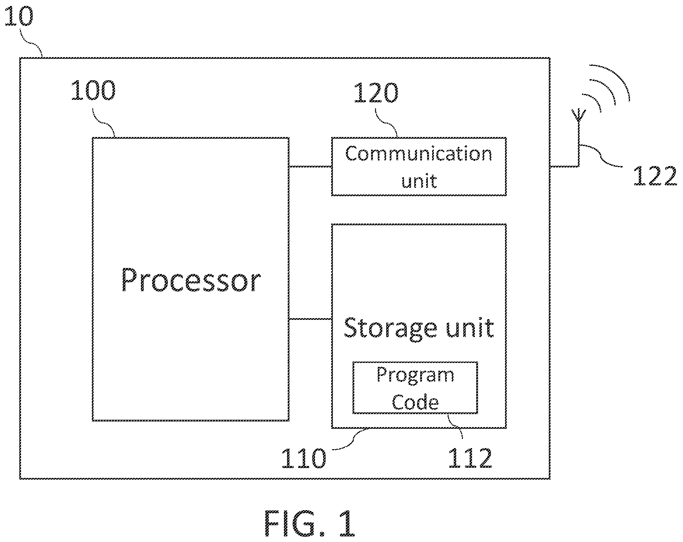

FIG. 1 relates to a schematic diagram of a wireless terminal 10 according to an embodiment of the present disclosure. The wireless terminal 10 may be a user equipment (UE), a UE-A, a UE-B, a mobile phone, a laptop, a tablet computer, an electronic book or a portable computer system and is not limited herein. The wireless terminal 10 may include a processor 100 such as a microprocessor or Application Specific Integrated Circuit (ASIC), a storage unit 110 and a communication unit 120. The storage unit 110 may be any data storage device that stores a program code 112, which is accessed and executed by the processor 100. Embodiments of the storage unit 112 include but are not limited to a subscriber identity module (SIM), read-only memory (ROM), flash memory, random-access memory (RAM), hard-disk, and optical data storage device. The communication unit 120 may a transceiver and is used to transmit and receive signals (e.g. messages or packets) according to processing results of the processor 100. In an embodiment, the communication unit 120 transmits and receives the signals via at least one antenna 122 shown in FIG. 1.

In an embodiment, the storage unit 110 and the program code 112 may be omitted and the processor 100 may include a storage unit with stored program code.

The processor 100 may implement any one of the steps in exemplified embodiments on the wireless terminal 10, e.g., by executing the program code 112.

The communication unit 120 may be a transceiver. The communication unit 120 may as an alternative or in addition be combining a transmitting unit and a receiving unit configured to transmit and to receive, respectively, signals to and from a wireless network node (e.g. a base station) or another wireless communication terminal.

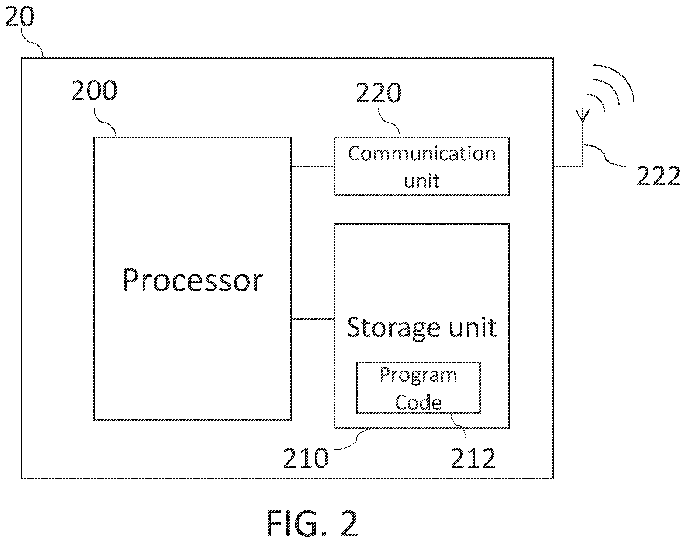

FIG. 2 relates to a schematic diagram of a wireless network node 20 according to an embodiment of the present disclosure. The wireless network node 20 may be a satellite, a base station (BS), a smart node, a network entity, a Mobility Management Entity (MME), Serving Gateway (S-GW), Packet Data Network (PDN) Gateway (P-GW), a radio access network (RAN) node, a next generation RAN (NG-RAN) node, a gNB, an eNB, a gNB central unit (gNB-CU), a gNB distributed unit (gNB-DU) a data network, a core network or a Radio Network Controller (RNC), and is not limited herein. In addition, the wireless network node 20 may comprise (perform) at least one network function such as an access and mobility management function (AMF), a session management function (SMF), a user place function (UPF), a policy control function (PCF), an application function (AF), etc. The wireless network node 20 may include a processor 200 such as a microprocessor or ASIC, a storage unit 210 and a communication unit 220. The storage unit 210 may be any data storage device that stores a program code 212, which is accessed and executed by the processor 200. Examples of the storage unit 212 include but are not limited to a SIM, ROM, flash memory, RAM, hard-disk, and optical data storage device. The communication unit 220 may be a transceiver and is used to transmit and receive signals (e.g. messages or packets) according to processing results of the processor 200. In an example, the communication unit 220 transmits and receives the signals via at least one antenna 222 shown in FIG. 2.

In an embodiment, the storage unit 210 and the program code 212 may be omitted. The processor 200 may include a storage unit with stored program code.

The processor 200 may implement any steps described in exemplified embodiments on the wireless network node 20, e.g., via executing the program code 212.

The communication unit 220 may be a transceiver. The communication unit 220 may as an alternative or in addition be combining a transmitting unit and a receiving unit configured to transmit and to receive, respectively, signals to and from a wireless terminal (e.g. a user equipment or another wireless network node).

### Example background:

### Trigger based coordination information:

UE-A transmit the coordination information to UE-B after receiving a request message from UE-B.

### Conditional based coordination information:

UE-A transmit the coordination information to UE-B based on some pre-defined condition, i.e. without explicitly request message from UE-B. coordination information transmitted from UE-A to UE-B includes at least one of following resource set:
1. perferred resource. The resource preferred used for UE-B transmission from UE-A perspective.
2. non-preferred resource, The resource non-preferred used for UE-B transmisison from UE-A perspective.
3. collide resource, the resources reserved by UE-B and UE-A detects that the resource reserved by UE-B is conflict with resource reserved by other UE.

The coordination information/coordination information request message can be a MAC CE or a LCH message or RRC signaling.

### Example 0:

In an embodiment, for determining the preferred resource set, when the inter-UE coordination information transmission is triggered, the UE-A can determine, according to its implementation, the values of the following parameters: priority of transmission, the number of sub-channels for transmission; and the resource reservation interval for transmission.

In the embodiment, for a UE using mode2 (creating Sidelink (SL) grant for itself), during grant generation, the UE may select an amount of subchannels that is configured by Radio Resource Control (RRC) according to the highest priority of the logical channel(s) and the Channel Busy Ratio (CBR).

If inter-UE coordination is used, in case the UE-A determines the number of the subchannels, it is possible that the selected number of the subchannels of the UE-A is different from the selected number of the subchannels of the UE-B. In this case, the inter-UE coordination information provided by the UE-A cannot be used by the UE-B.

After receiving the inter-UE coordination information from the UE-A, the UE-B may take the inter-UE coordination information (IUC) into account during resource selection. For example, for preferred resource in IUC, the UE-B may first select the preferred resource for transmission. For non-preferred resource in IUC, the UE-B may exclude the non-preferred resource from the candidate resource set. However, it is possible the UE-B is not capable of handling the preferred or non-preferred resource.

Therefore, the UE-B can transmit the capability of handling the preferred, non-preferred, and/or collide resource to the UE-A. If the UE-B is not capable of handling the preferred resource, the UE-A may not transmit the preferred resource to the UE-B. If the UE-B is not capable of handling the non-preferred resource, the UE-A may not transmit the non-preferred resource to the UE-B. If the UE-B is not capable of handling the collide resource, the UE-A may not transmit the collide resource to the UE-B.

For transmission of IUC, in some embodiments, at least three issues need to be considered, including: selecting a resource pool for transmission, selecting a resource set in the resource pool for transmission, and performing Logical Channel Prioritization (LCP) procedure to allow the IUC to be transmitted together with other data from the UE-A to the UE-B.

For transmission of IUC, in some embodiments, it is possible that the generation of the inter-UE coordination information can be triggered only when the UE-A has data to be transmitted together with the inter-UE coordination information to the UE-B. In other words, the IUC cannot be transmitted standalone.

Therefore, following issues need to be solved:
1) First issue is that it is possible that the IUC generation or transmission can be triggered only when UE-A has data to be transmitted together with the IUC to UE-B. In other words, the IUC cannot be transmitted standalone. Since IUC is assistance information, which should be deprioritized during transmission. Similarly, the request message from UE-B to UE-A may also cannot be transmitted standalone.
2) Another issue is how UE-B identifies the received IUC belonging to which resource pool in the case that the resource pool index is not included in the IUC. One possible solution is the IUC belongs to the resource pool where the IUC is received. Therefore, IUC can only be transmitted in resource pool in which the IUC is generated.
3) For UE-A to know which resource pool is used to generate the IUC, one possible solution is the resource pool used to generate the IUC is the resource pool where the request from UE-B is received. In other words, in case UE-B wants to request the IUC for one resource pool, the corresponding request message can only be transmitted in this resource pool.

And, for trigger based coordination information, the resource pool for transmission IUC, the resource pool for transmission of IUC request message, and the resource pool for IUC generation are same resource pool.

For conditional based coordination information, the resource pool for transmission IUC
and the resource pool for IUC generation are same resource pool.

In an embodiment, the IUC can be generated or transmitted if the logical channel or MAC CE (medium access control control element) other than the IUC is available for transmission.

The LCP procedure can include the following steps:
Step 1: selecting the LCH (logical channel) or MAC CE that satisfy the pre-defined condition.
Step 2: selecting the highest LCH or MAC CE among the selected LCH or MAC CEs.
Step 3: selecting the destination (e.g., a RX UE) with the selected highest LCH or MAC CE.
Step 4: selecting the LCH or MAC CE belonging to the selected destination that satisfy the pre-defined condition.
Step 5: multiplexing the selected LCH or MAC CE into the MAC PDU.

That is, Step 1, 2, and 3 are destination selection. Step 4 is the LCH selection. Step 5 is the MAC PDU multiplexing.

### Example: transmission of IUC:

How UE-B identifies the received IUC belonging to which resource pool in case resource pool index is not included in the IUC. One possible solution is the IUC belongs to the resource pool where the IUC is received. Therefore, IUC can only be transmitted in resource pool in which the IUC is generated. Following embodiments describes in this example describes how to achieve this.

### Resource pool limitation during LCP

If the IUC belongs to a destination is available, the IUC is allowed to be multiplexed into the MAC PDU belongs to this destination if the resource pool of SL grant is the resource pool where the IUC is generated.

During the step1, the condition for selecting the IUC includes at least one of following:
1. If the IUC is available for transmission,
2. if IUC is generated from the resource pool including the SL grant.

In other words, during destination selection, the IUC can be selected to judge whether the associated destination can be selected if IUC is generated from the resource pool associated to the SL grant.

During the step4, the condition for selecting the IUC includes at least one of following:
1. If the IUC belonging to a selected destination is available for transmission,
2. if IUC is generated from the resource pool including the SL grant.

### Non-standalone transmission LCP

During LCP procedure, the IUC for a destination can be generated or transmitted if the logical channel or MAC CE belonging to the same destination other than IUC is available for transmission.

If the IUC belonging to a specific destination is generated, the IUC is allowed to be multiplexed into the MAC PDU belonging to this destination if LCH or MAC CEs other than IUC belonging to same destination is available. Whether IUC is multiplexed into the MAC PDU depends on the size of SL grant and priority order.

During the step1, the condition for selecting the IUC includes at least one of following:
1. if IUC is available for transmission,
2. if LCH or MAC CEs other than IUC belonging to same destination is available for transmission.

In other words, during destination selection, the IUC can be selected to judge whether the associated destination can be selected if LCH or MAC CEs other than IUC belonging to same destination is available.

During the step4, the condition for selecting the IUC includes at least one of following:
1. If the IUC belonging to a selected destination is available for transmission,
2. if LCH or MAC CEs other than IUC belonging to same destination is available for transmission.

### Resource pool restriction

If the IUC belongs to a specific destination (i.e. UE-B) is available, UE-A select the resource pool where the IUC is generated.

Considering that except IUC message, HARQ enable/disable attribute of LCH will also influence the resource pool selection. In this case:
If LCH is HARQ enabled, and if IUC is available, and if the resource pool from which IUC is generated is configured with PSFCH resource, UE-A selects the resource pool associated to the IUC.

If LCH is HARQ disabled, UE-A selects any resource pool configured with PSFCH resource.

### Example: Transmission of request message

For UE-A to know which resource pool is used to generate the IUC, one possible solution is the resource pool used to generate the IUC is the resource pool where the request from UE-B is received. In other words, in case UE-B wants to request the IUC for one resource pool, the corresponding request message can only be transmitted in this resource pool.

The request message for a destination can be generated or transmitted if the logical channel or MAC CE belonging to same destination other than request message is available for transmission.

### Resource pool limitation LCP

If the request message belongs to a destination is available, the IUC is allowed to be multiplexed into the MAC PDU belongs to this destination if the request message is used to request IUC for the resource pool associated to the SL grant.

During the step1, the condition for selecting the IUC request message includes at least one of following:
1. If the request message is available for transmission,
2.if the request message is used to request IUC for the resource pool including the SL grant.

In other words, during destination selection, the request message can be selected to judge whether the associated destination can be selected if the request message is used to request IUC for the resource pool associated to the SL grant.

During the step4, the condition for selecting the IUC request message includes at least one of following:
1. If the request message belonging to a selected destination is available for transmission,
2. if the request message is used to request IUC for the resource pool including the SL grant.

### Non standalone transmission LCP

During LCP procedure, the request message for a destination can be generated or transmitted if the logical channel or MAC CE belonging to the same destination other than reqeust message is available for transmission.

If the request message belonging to a specific destination is generated, the IUC is allowed to be multiplexed into the MAC PDU belonging to this destination if LCH or MAC CEs other than IUC belonging to same destination is available. Whether request message is multiplexed into the MAC PDU depends on the size of SL grant and priority order.

During the step1, the condition for selecting the IUC request message includes at least one of following:
1. if request message is available for transmission,
2.if LCH or MAC CEs other than request message belonging to same destination is available for transmission.

In other words, during destination selection, the request message can be selected to judge whether the associated destination can be selected if LCH or MAC CEs other than request message belonging to same destination is available.

During the step4, the condition for selecting the IUC request message includes at least one of following:
1. If the request message belonging to a selected destination is available for transmission,
2. if LCH or MAC CEs other than request message belonging to same destination is available for transmission.

### Resource pool restriction

If UE-B wants to obtain the IUC for a resource pool and corresponding request message is generated(i.e. the request IUC and request signaling is associated this resource pool), UE-B select the resource pool that the request message is used for requesting IUC for.

Considering that except request message, HARQ enable/disable attribute of LCH will also influence the resource pool selection. In this case:
If LCH is HARQ enabled, and if request message is available, and if the resource pool associated to the request message is configured with PSFCH resource, UE-B selects the resource pool associated to the request message.

If LCH is HARQ disabled, UE-B selects any resource pool configured with PSFCH resource.

### Example: Handling of scheme2 IUC

In an embodiment, during resource selection, in a case that Scheme2 is used, the UE-B may receive the feedback (e.g., IUC) via the PSFCH resource). However, for the UE-A to have enough time to send the feedback to the UE-B, a time gap between the signaling (e.g., a request for IUC) triggering the Scheme2 feedback (e.g., IUC) and the feedback may greater than or equal to a configured threshold. Therefore, during resource selection, if the UE-B uses Scheme2, the UE-B may select a resource set that can satisfy the time gap requirement.

In the case that Scheme2 is used, the UE-B may receive the indication that a selected resource conflicts with a resource reserved by another UE (e.g., UE-A). Therefore, in case the UE-B receives such an indication, the UE-B can: remove the conflicted resource(s) in the slot including the conflicted resource indicated by the UE-A; or select another available resource and use the selected resource to replace the conflicted resource indicated by the UE-A.

In an embodiment, for triggered-based Scheme1, the resource pool used for transferring the set of resources is the same resource pool used for the UE-B's request transmission.

In an embodiment, for conditional-based Scheme1, if the set of resource is selected from one resource pool, the set of resources may be transferred to the UE-B by using the same resource pool.

In some embodiment, for the UE-A in mode2 to select the transmission resource, the UE may select a resource pool first.

In an embodiment, if the conditional-based inter-UE coordination information is generated to be transferred to the UE-B, the UE-A selects the resource pool in which the inter-UE coordination information is generated.

In an embodiment, if the triggered-based inter-UE coordination information is generated to be transferred to the UE-B, the UE-A selects the resource pool in which the inter-UE coordination information is generated or the request from the UE-B is received.

### Example 1:

In an embodiment, in an NR V2X system, the UE can send sidelink traffic pattern information as assistance information to the gNB to inform the service priority, period and offset. In an embodiment the sidelink traffic pattern information includes a traffic period, a timing offset, a message size, and a sidelink Quality of Service Flow Identity (QFI). All the information in these Information Elements (IEs) is mandatory in the sidelink traffic pattern information.

An SL relay UE transmits the discovery signal periodically to remote UEs, and the discovery signal does not correspond to any Quality of Service flow. When the SL relay UE report the transmit sidelink traffic pattern information, the SL relay UE may include an indication in the sidelink traffic pattern information indicating the transmitted sidelink traffic pattern information is for the discovery signal.

In an embodiment, a specific SL QFI can be used as the sidelink QFI in the sidelink traffic pattern information indicating the transmitted sidelink traffic pattern information is for the discovery signal.

In an embodiment, the sidelink traffic pattern information may include an additional indication (e.g. a new IE) indicating the transmitted sidelink traffic pattern information is for the discovery signal.

### Example 2:

For sidelink relay, remote UE can report the RSRP of connected relay UE to gNB for determination of path switch.

The RSRP measured by remote UE can be the RSRP of sidelink commination with relay UE or RSRP of discovery message transmitted by relay UE.

However, in case remote UE wants to measure the RSRP of discovery message transmitted by relay UE, considering remote UE may receive discovery message from more than one relay UEs, and relay UE may change the SRC L2 ID of transmission discovery message, remote UE needs to know the SRC L2 ID of discovery message transmitted by serving relay UE, so that remote UE can identify which received discovery message and corresponding RSRP measurements belongs to .

Following options can be used to solve this issue:
Option1. relay UE will not change the SRC L2 ID of discovery message.

Option2. Upon SRC L2 ID of discovery message to remote UE is changed, relay UE indicate the old SRC L2 ID to remote UE. In further embodiment, the old SRC L2 ID is included in the discovery message. Upon the SRC L2 ID of discovery message is changed, the transmission of discovery message uses the updated SRC L2 ID, and the old SRC L2 ID is included in the discovery message. After receiving the discovery message, remote UE can associate the old SRC L2 ID to the updated SRC L2 ID of discovery message.

Opiton3, Upon SRC L2 ID of discovery message to remote UE is changed, relay UE indicates the updated SRC L2 ID to remote UE. In further embodiment, the relay UE uses Link L2 ID modification message to indicate the update the SRC L2 ID of discovery message to relay UE. In further embodiment, the Link L2 ID modification message includes whether the updated SRC L2 ID is used for SL communication or SL discovery message or both. In further embodiment, the relay UE uses PC5 RRC signaling to indicate the update the SRC L2 ID of discovery message to relay UE.

Option4: Irrespective of whether SRC L2 ID for discovery or SL communication is changed, for a specific remote UE, relay UE sends the discovery message by using the SRC L2 ID for SL communication of remote UE.

Option5: Discovery message of connected relay UE may use a dedicated resource or resource pool. Remote UE considers that the received discovery message received from a dedicated resource or resource pool is transmitted by connected relay UE. In this case, the remote UE is configured by a dedicated or resource pool in which the discovery message of connected relay UE is transmitted.

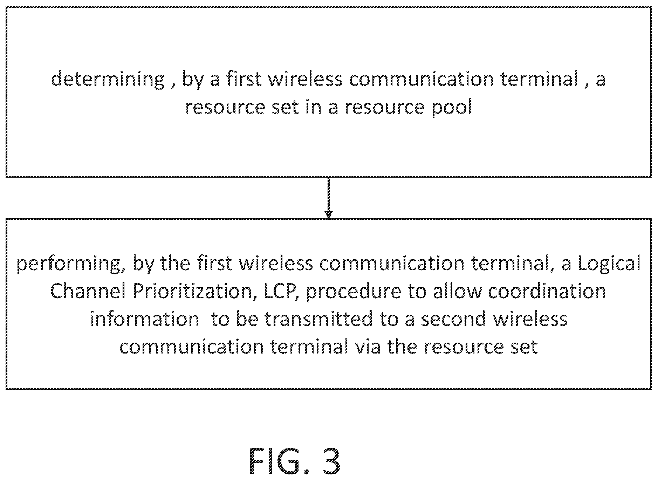

FIGs. 3 to 6 show flowcharts of wireless communication methods according to embodiments of the present disclosure.

As shown in FIG. 3, a wireless communication method includes: determining, by a first wireless communication terminal, a resource set in a resource pool; and performing, by the first wireless communication terminal, a Logical Channel Prioritization, LCP, procedure to allow coordination information to be transmitted to a second wireless communication terminal via the resource set; wherein the coordination information is transmitted to allow the second wireless communication terminal to perform a sidelink transmission with the first wireless communication terminal.

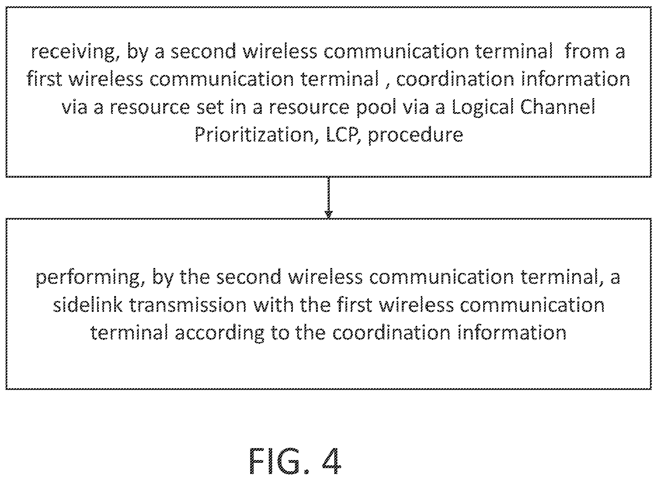

As shown in FIG. 4, a wireless communication method includes: receiving, by a second wireless communication terminal from a first wireless communication terminal , coordination information via a resource set in a resource pool via a Logical Channel Prioritization, LCP, procedure; and performing, by the second wireless communication terminal, a sidelink transmission with the first wireless communication terminal according to the coordination information.

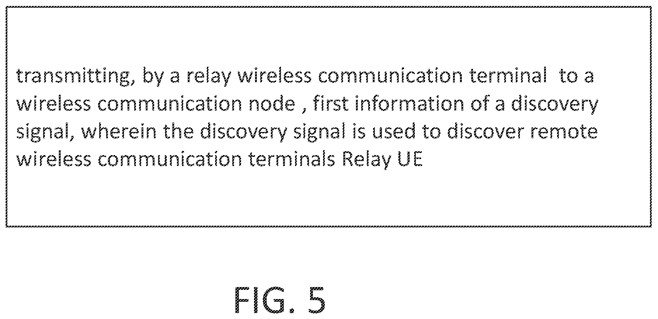

As shown in FIG. 5, a wireless communication method includes: transmitting, by a relay wireless communication terminal to a wireless communication node, first information of a discovery signal, wherein the discovery signal is used to discover remote wireless communication terminals.

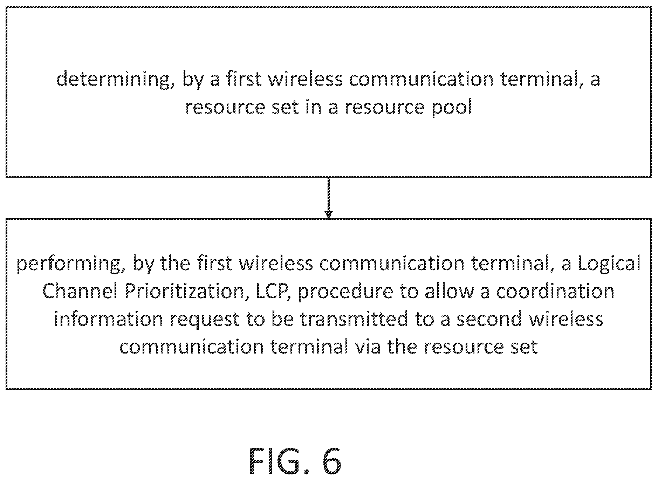

As shown in FIG. 6, a wireless communication method includes: determine a resource set in a resource pool; and perform a Logical Channel Prioritization, LCP, procedure to allow a coordination information request to be transmitted to a second wireless communication terminal via the resource set; wherein coordination information request is used to request the coordination information and the coordination information is used to allow the first wireless communication terminal to perform a sidelink transmission with the second wireless communication terminal.

Details of these method can be ascertained by referring to the embodiments above.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of the claims. Thus, the disclosure is not intended to be limited to the implementations shown herein, but is to be accorded the widest scope consistent with the novel features and principles disclosed herein, as recited in the claims below.

## Claims

1. A wireless communication method comprising:
determining, by a first wireless communication terminal, a resource pool where coordination information is generated;
determining, by the first wireless communication terminal, a resource set in the resource pool; and
performing, by the first wireless communication terminal, a Logical Channel Prioritization, LCP, procedure to transmit coordination information to a second wireless communication terminal via the resource set;
wherein the coordination information is transmitted to allow the second wireless communication terminal to perform a sidelink transmission with the first wireless communication terminal.

2. The wireless communication method of claim 1, wherein the coordination information comprises at least one of a preferred resource or a non-preferred resource.

3. A wireless communication method comprising:
receiving, by a second wireless communication terminal from a first wireless communication terminal, coordination information via a resource set in a resource pool; and
performing, by the second wireless communication terminal, a sidelink transmission with the first wireless communication terminal according to the coordination information;
wherein the resource pool is a resource pool where the coordination information is generated.

4. The wireless communication method of claim 3, wherein the coordination information comprises at least one of a preferred resource or a non-preferred resource.

5. The wireless communication method of claim 3, wherein the second wireless communication terminal is configured to receive an indication indicating a resource conflict from the first wireless communication terminal, remove a conflicted resource according to the indication, and reselect an available resource to replace a conflicted resource.

6. A wireless communication terminal (10), comprising:
a communication unit (120); and
a processor (100) configured to: perform a wireless communication method of any of claims 1 to 2.

7. A wireless communication terminal (10), comprising:
a communication unit (120); and
a processor (100) configured to: perform a wireless communication method of any of claims 3 to 5.

8. A computer program product comprising a computer-readable program medium code stored thereupon, the code, when executed by a processor, causing the processor to implement a wireless communication method recited in any of claims 1 to 5.

## Patentansprüche

1. Verfahren für drahtlose Kommunikation, aufweisend:
Bestimmen, durch ein erstes drahtloses Kommunikationsendgerät, eines Ressourcenpools, in dem Koordinierungsinformationen erzeugt werden;
Bestimmen, durch das erste drahtlose Kommunikationsendgerät, eines Ressourcensatzes in dem Ressourcenpool; und
Durchführen, durch das erste drahtlose Kommunikationsendgerät, eines Logical Channel Prioritization-Prozesses, LCP-Prozesses, um Koordinationsinformationen an ein zweites drahtloses Kommunikationsendgerät über den Ressourcensatz zu übertragen;
wobei die Koordinierungsinformationen übertragen werden, um dem zweiten drahtlosen Kommunikationsendgerät zu ermöglichen, eine Sidelink-Übertragung mit dem ersten drahtlosen Kommunikationsendgerät durchzuführen.

2. Drahtloses Kommunikationsverfahren nach Anspruch 1, wobei die Koordinierungsinformationen mindestens eines von einer bevorzugten Ressource oder einer nicht-bevorzugten Ressource aufweisen.

3. Verfahren für drahtlose Kommunikation, aufweisend:
Empfangen, durch ein zweites drahtloses Kommunikationsendgerät von einem ersten drahtlosen Kommunikationsendgerät, von Koordinierungsinformationen über einen Ressourcensatz in einem Ressourcenpool; und
Durchführen, durch das zweite drahtlose Kommunikationsendgerät, einer Sidelink-Übertragung mit dem ersten drahtlosen Kommunikationsendgerät gemäß den Koordinierungsinformationen;
wobei der Ressourcenpool ein Ressourcenpool ist, in dem die Koordinierungsinformationen erzeugt werden.

4. Drahtloses Kommunikationsverfahren nach Anspruch 3, wobei die Koordinierungsinformationen mindestens eines von einer bevorzugten Ressource oder einer nicht-bevorzugten Ressource aufweisen.

5. Drahtloses Kommunikationsverfahren nach Anspruch 3, wobei das zweite drahtlose Kommunikationsendgerät konfiguriert ist, um eine Anzeige zu empfangen, die einen Ressourcenkonflikt von dem ersten drahtlosen Kommunikationsendgerät anzeigt, eine in Konflikt stehende Ressource gemäß der Anzeige zu entfernen und eine verfügbare Ressource neu zu wählen, um eine in Konflikt stehende Ressource zu ersetzen.

6. Drahtloses Kommunikationsendgerät (10), aufweisend:
eine Kommunikationseinheit (120); und
einen Prozessor (100), der konfiguriert ist zum: Durchführen eines drahtlosen Kommunikationsverfahrens nach einem der Ansprüche 1 bis 2.

7. Drahtloses Kommunikationsendgerät (10), aufweisend:
eine Kommunikationseinheit (120); und
einen Prozessor (100), der konfiguriert ist zum: Durchführen eines drahtlosen Kommunikationsverfahrens nach einem der Ansprüche 3 bis 5.

8. Computerprogrammprodukt, aufweisend ein computerlesbares Programmmedium mit darauf gespeichertem Code, wobei der Code, wenn er von einem Prozessor ausgeführt wird, den Prozessor veranlasst, ein drahtloses Kommunikationsverfahren zu implementieren, das in einem der Ansprüche 1 bis 5 angegeben ist.

## Revendications

1. Procédé de communication sans fil comprenant :
la détermination, par un premier terminal de communication sans fil, d'un groupe de ressources où des informations de coordination sont générées ;
la détermination, par le premier terminal de communication sans fil, d'un ensemble de ressources dans le groupe de ressources ; et
la réalisation, par le premier terminal de communication sans fil, d'une procédure de hiérarchisation de canal logique, LCP, pour transmettre des informations de coordination à un second terminal de communication sans fil par l'intermédiaire de l'ensemble de ressources ;
dans lequel les informations de coordination sont transmises pour permettre au second terminal de communication sans fil de réaliser une transmission de liaison latérale avec le premier terminal de communication sans fil.

2. Procédé de communication sans fil selon la revendication 1, dans lequel les informations de coordination comprennent au moins l'une parmi une ressource préférée ou une ressource non préférée.

3. Procédé de communication sans fil comprenant :
la réception, par un second terminal de communication sans fil provenant d'un premier terminal de communication sans fil, d'informations de coordination par l'intermédiaire d'un ensemble de ressources dans un groupe de ressources ; et
la réalisation, par le second terminal de communication sans fil, d'une transmission de liaison latérale avec le premier terminal de communication sans fil selon les informations de coordination ;
dans lequel le groupe de ressources est un groupe de ressources où les informations de coordination sont générées.

4. Procédé de communication sans fil selon la revendication 3, dans lequel les informations de coordination comprennent au moins l'une parmi une ressource préférée ou une ressource non préférée.

5. Procédé de communication sans fil selon la revendication 3, dans lequel le second terminal de communication sans fil est configuré pour recevoir une indication indiquant un conflit de ressources provenant du premier terminal de communication sans fil, supprimer une ressource en conflit selon l'indication, et sélectionner de nouveau une ressource disponible pour remplacer une ressource en conflit.

6. Terminal de communication sans fil (10), comprenant :
une unité de communication (120) ; et
un processeur (100) configuré pour : réaliser un procédé de communication sans fil selon l'une quelconque des revendications 1 à 2.

7. Terminal de communication sans fil (10), comprenant :
une unité de communication (120) ; et
un processeur (100) configuré pour : réaliser un procédé de communication sans fil selon l'une quelconque des revendications 3 à 5.

8. Produit-programme informatique comprenant un code de support de programme lisible par ordinateur stocké sur celui-ci, le code, lorsqu'il est exécuté par un processeur, amenant le processeur à mettre en œuvre un procédé de communication sans fil selon l'une quelconque des revendications 1 à 5.
